# EUROPÄISCHE PATENTSCHRIFT

(11) **EP 0 584 144 B1**
(45) Veröffentlichungstag und Bekanntmachung des Hinweises auf die Patenterteilung: **02.11.1995**
(21) Anmeldenummer: 92909868.9
(22) Anmeldetag: 07.05.1992
(51) Int. Cl.: B25J 15/02, B25J 15/10, B25J 18/02, B25J 9/14

(54) **GREIFERMECHANISMUS**
GRIPPING MECHANISM
MECANISME DE PREHENSION

(30) Priorität: 15.05.1991 DE 4115912; 04.03.1992 DE 4206708
(43) Veröffentlichungstag der Anmeldung: 02.03.1994
(73) Patentinhaber: SAADAT, Mohammad Mohsen, Prof. Dr.-Ing., D-59494 Soest (DE)
(72) Erfinder: SAADAT, Mohammad Mohsen, Prof. Dr.-Ing., D-59494 Soest (DE)
(86) Internationale Anmeldenummer: EP9201002
(87) Internationale Veröffentlichungsnummer: WO9220496

(56) Entgegenhaltungen:
- EP-A- 0 205 141
- EP-A- 0 309 613
- DE-A- 2 361 973
- DE-A- 3 529 592
- DE-C- 3 441 643
- US-A- 3 051 327
- US-A- 4 507 045
- US-A- 4 665 558
- US-A- 4 686 870

## Beschreibung

Die Erfindung betrifft einen Greifmechanismus für ein Handhabungsgerät oder dergleichen gemäß Gattungsbegriff des Anspruchs 1.

Ein derartiger Greifmechanismus ist in der DE-PS 34 41 643.9 beschrieben. Dabei wird der Greiffinger als Koppel eines sechsgliedrigen zwangläufigen Führungsgetriebes geführt. Das sechsgliedrige Führungsgetriebe besteht aus der Kombination aus einem speziellen Schubkurbelgetriebe, einem gleichschenkligen, und einem speziellen Gelenkviereck, einem Gelenkparallelogramm, derart, daß der Schieber des Schubkurbelgetriebes und der Greiffinger zusammen zwei gegenüberliegende Lenker des Gelenkvierecks bilden. Das Schubgelenk des Schubkurbelgetriebes und der Antrieb des Greifmechanismus bilden zusammen eine Einheit, wobei die Schubstange der Antriebseinheit gegenüber dem Greifergehäuse bzw. -gestell keine Bewegung in Richtung der Schubachse vollführt.

Bei der Erfindung nach DE-PS 34 41 643.9 dient die einzige Schubstange der zentral angeordneten Antriebseinheit als Befestigungsglied zum Roboterarm. Diese Stange muß sich durch den beweglichen Zylinder hindurch erstrecken und die gesamten seitlichen Belastungen des Greifers einschließlich des Objektgeweichts sowie der dynamischen Quer- und Torsionskräfte, die bei dem Transport und bei der Drehung des Objekts entstehen, auffangen bzw. auf den Roboterarm übertragen. Hierdurch ist dieser Greifmechanismus in der Belastbarkeit sehr eingeschränkt. Er ist torsions- und biegeweich und verliert bei größeren Objektgewichten an Stabilität und Positioniergenauigkeit.

Ein weiterer Greifermechanismus ist durch die EP 0 15 32 11 bekannt. Dort wird der Greiffinger als Lenker eines sechsgliedrigen zwangläufigen Führungsgetriebe am Gestell geführt. Der dem Greiffinger gegenüberliegende Lenker eines Gelenkparallelogramms wird mittels Schubstange eines Schubgelenkes, das als Betätigungseinheit dient, angetrieben. Dabei wandert der Greiffinger entlang einer am Gestell befestigten Führungsplatte senkrecht zur Schubachse gradlinig auf und ab. Bei der Betätigungseinheit ist die Schubstange zentral und beweglich und der Zylinder gestellfest angeordnet.

Demgegenüber liegt der Erfindung die Aufgabe zugrunde, einen gattungsgemäßen Greifmechanismus biege- und torsionssteifer auszugestalten.

Diese Aufgabe wird erfindungsgemäß mit den in Anspruch 1 angegebenen Merkmalen gelöst.

Die Unteransprüche stellen vorteilhafte Weiterbildungen der Erfindung dar.

Zufolge der Ausbildung der Schubstange als ein Käfig, der von mehreren dezentral angeordneten Stangen ausgebildet ist, ist mit einfachen Mitteln eine Querschnittsverbreiterung der Führungs- und Halteorgane des Greifermechanismus erreicht. Dabei ist es von Vorteil, wenn der Schieber als Schlitten auf den Stangen gleitend angeordnet ist. Durch diese Anordnung ist eine exakte Führung des Schiebers ermöglicht, der seinerseits wiederum den Stangen eine zusätzliche Quer- und Biegesteifigkeit verleitet. Eine weitere vorteilhafte Ausgestaltung der Erfindung sieht vor, daß endseitig der Stangen Spannplatten angeordnet sind, welche es ermöglichen, die Stangen vorzuspannen. Dabei können die Stangen entweder auf Druck oder auf Zug belastet werden. Durch diese Vorspannung wird eine erhebliche Biege- und Torsionsstabilitätssteigerung des Käfigs erreicht. Um eine Vorspannung der Stangen auf Zug zu erreichen, können diese hohl ausgestaltet sein. Dabei kann die Vorspannung durch eine in den hohlen Stangen steckende vorgespannte Gewindestange erreicht werden. Die Bewegung des Schiebers relativ zur Schubstange kann mit einer Zylinder-Kolbenanordnung erzielt werden. Dabei ist bevorzugt im Käfig eine Kolbenstange angeordnet, welcher ein ortsfester Kolben, in einem dem Schieber zugeordneten Zylinder angeordnet ist. Die Bewegung des Zylinders relativ zum Kolben ist bevorzugt druckmittelgesteuert. Die Druckmittelzuleitung zum Zylinder werden bevorzugt von den hohlen Stangen ausgebildet. Bei einer bevorzugten Weiterbildung der Erfindung ist zwischen den Spannplatten ein Körper eingespannt, wobei die Spannung von den auf Zug belasteten Stangen erzielt werden kann. In vorteilhafter Weise wird der Körper zentral zwischen den Stangen angeordnet und ist als Hohlkörper ausgebildet. Hierbei kann auch vorgesehen sein, daß der Körper den Kolben ausbildet, auf welchem der von dem Schieber ausgebildete Zylinder läuft. Die Ausbildung des Körpers als Hohlkörper ist zum einen gewichtssparend und bietet zum anderen die Möglichkeit, die Druckmittelzuleitungen in den Hohlkörper zu verlegen bzw. den Hohlraum selbst als Drckmittelzuleitung auszunutzen.

Der Greifmechanismus nach der Erfindung weist in einfachster Anordnung ein einziges sechsgliedriges Führungsgetriebe auf, das einen Greiffinger als Koppel eines Gelenkvierecks durch die Translationsbewegung des Schiebers vom Schubgelenk eines Schubkurbelgetriebes relativ zur Schubachse auf- und abbewegt. Bei dieser Anordnung befindet sich der zweite Greiffinger unbeweglich am vorderen Spannelement der Schubstangen, die aus mindestens zwei Stangen bestehen.

Das Führungsgetriebe des Greiffingers kann aus der Kombination aus einem Schubkurbelgetriebe und einem Gelenkviereck bestehen, derart, daß der Greiffinger die Koppel des Gelenkvierecks und ein dem Greiffinger benachbartes Glied des Gelenkvierecks die Koppel des Schubkurbelgetriebes darstellt. Das dem Greiffinger gegenüberliegende Glied des Gelenkvierecks ist der Schieber des Schubkurbelgetriebes. Somit besitzen das Gelenkviereck und das Schubkurbelgetriebe zwei gemeinsame Glieder, und das Führungsgetriebe hat insgesamt sechs Getriebeglieder, sechs Drehgelenke und ein Schubgelenk, wobei das Schubgelenk als Antrieb des Führungsgetriebes und die Schubstange als Gestell dient.

Durch gezielte Bestimmung und Festlegung der Getriebeabmessungen kann der Greiffinger während seiner Auf- und Abbewegung sich auch in seiner Bewegungsebene, die durch die Schubachse geht und senkrecht zu den Achsen der Drehgelenke steht, im Uhrzeigersinn und entgegen diesem in großen Grenzen nach Belieben neigen, um sich beispielsweise der Form des zu handhabenden Objektes anzupassen.

Vorteilhaft ist die Schubstange dezentral und mehrteilig ausgebildet. Die einzelnen Stangen, mindestens zwei, sind an ihren Enden mit Hilfe von Spannelementen bzw. Spannplatten miteinander derart verbunden, daß sie parallel zueinander verlaufen und gemeinsam mit ihren beidseitigen Spannplatten zusammen einen geschlossenen Käfig bilden, der für den Greifmechanismus als Gestell bzw. Gehäuse dient und mit seiner hinteren Spannplatte am Roboterarm bzw. Handhabungsgerät befestigt wird.

Diese Käfigkonstruktion verleiht erfindungsgemäß der Schubstange eine sehr große Steifigkeit gegenüber Torsions- und Biegemomente und gestattet eine Leichtbaukonstruktion, wie diese für Handhabungsgeräte für größere Lasten und schnellere Geschwindigkeiten erforderlich ist. Außerdem gibt die Käfigkonstruktion den Innenraum des Schubgelenkes für andere Aufgaben wie z. B. für die Anbringung von Kameras zwecks Positionierung des Greifers, Anbringung von Sensoren jeglicher Art oder auch zur querkraftlosen Anbringung bzw. elektromotorisch oder mit Seilzug betätigten Antriebseinheit frei.

Zwecks Erzielung einer noch größeren Biege- und Torsionssteifigkeit dieses Käfigs werden die Schubstangen mittels der beidseitig angebrachten Spannplatten auf Zug oder Druck vorgespannt, indem beispielsweise die Schubstangen wie ein Rohr hohl ausgebildet sind und durch den hohlen Innenraum eine Zugstange z. B. eine Gewindestange hindurchgeführt und gegen beide Spannplatten mit Kontermuttern angezogen wird.

Die Zug- und Druckstangen können auch außerhalb der Bohrungen der Schubstangen angeordnet werden, wenn diese Hohlräume für andere Zwecke wie z. B. für die Durchführung von Druckluft, Öl, Kabel, Schläuche und dgl. Verwendung finden.

Bei mehreren Schubstangen können diese wechselweise bzw. alternierend auf Zug bzw. Druck vorgespannt werden und auch selbst als Zug- bzw. Druckanker dienen, indem sie im mittleren Bereich zwecks Führung des Schlittens gehärtet und geschliffen und an den Enden mit Gewinden versehen sind.

Die vordere und hintere Spannplatte der Schubstangen sind vorzugsweise aus vorgefertigten Leichtmetallprofilen hergestellt und besitzen am Umfang profilartige Befestigungsmöglichkeiten sowohl zur schnellen Befestigung am Roboterarm bei der hinteren Platte als auch zur schnellen Anbringung von Fingermechanismen an der vorderen Platte.

Der Schieber des Schubgelenks, der als Schlitten auf den Schubstangen gleitet, ist vorzugsweise ebenfalls aus Leichtmetallprofil in Form von Strangpressprofil hergestellt und besitzt am Umfang die gleichen Befestigungsmöglichkeiten in Form von Befestigungsnuten wie die vordere Spannplatte der Schubstangen.

Der Schieber hat eine geometrische Form, die je nach Aufgabe des Greifers bzw. je nach Anzahl der erforderlichen Greiffinger und deren geometrischen Anordnung unterschiedlich im Querschnitt aussehen kann. Er kann rechteckig, dreieckig, fünf-, sechs-, achteckig, ellipsen- oder kreisförmig gestaltet sein. Er besitzt am Umfang dasselbe Profilbild wie die vordere Spannplatte der Schubstangen.

Der Schieber kann im Querschnitt mindestens soviele durchgehende, nicht zentral angeordnete Bohrungen besitzen, wie einzelne Schubstangen vorhanden sind. Mit diesen Bohrungen umhüllt er die Schubstangen entweder ganz, d. h. 360°, oder auch nur teilweise, d. h. weniger als 360°, und verleiht der Käfigkonstruktion der Schubstangen eine sehr große zusätzliche Quer- und Torsionssteifigkeit, da sich die Schubstangen innerhalb der Bohrungen des Schiebers nicht biegen können.

Am Anfang und am Ende der Bohrungen des Schiebers werden vorzugsweise entweder Gleitlager oder Wälzlagerbuchsen mit oder ohne Dichtungen eingesetzt, um ein reibungsärmeres Gleiten des Schiebers als Schlitten auf den Schubstangen zu ermöglichen.

Der Hohlraum zwischen den Schubstangen, der Innenwand der Bohrungen des Schiebers und den beiden Lagern am Anfang und Ende der Bohrung wird vorzugsweise unter dem geölten Druckluft gesetzt, um zum einen die Lager dauerhaft zu schmieren und zum anderen zu verhindern, daß sich Staub- und Schmutzpartikel in die Lager hinein begeben können. Die Druckluft kann über eine kleine Bohrung in der Zylinderwandung der hohlen Schubstange in den Hohlraum zwischen den Lagern gelangen.

Der Raum in der Mitte des Schiebers ist frei und eignet sich zur Unterbringung von Betätigungseinheiten jeglicher Art. Diese Betätigungseinheiten können dann ihre Kraft ausschließlich in axiale Richtung, d. h. in paralleler Richtung zu den Schubstangen auf die vordere oder hintere Spannplatte der Schubstangen aufbringen, um den Schieber hin- und herzubewegen. Eine Kupplung oder ein Kugelgelenk an der vorderen oder hinteren Spannplatte sorgt dafür, daß die auf die Schubstangen wirkenden Kräfte sich nicht auf die Antriebswelle oder -stange der Betätigungseinheit übertragen.

Die Antriebseinheit bzw. die Antriebseinheiten lassen sich auch direkt in den Bohrungen des Schiebers, in denen die Schubstangen geführt werden, derart realisieren, daß sich in den Bohrungen des Schiebers Kolbenringe auf den Schubstangen ortsfest befinden, die den zylindrischen Hohlraum zwischen der Bohrungs-Innenmantelfläche, Schubstangen-Außenmantelfläche und den Stirnseiten der beidseitigen Lager in zwei Räumen teilen. Eine dieser Raumhälften ist durch eine kleine Bohrung in der Außenmantelfläche der hohlen Schubstange mit dem Hohlraum der Schubstange verbunden, durch die von außen beispielsweise Druckluft zur Betätigung des Schiebers zugeführt wird. Somit dient die eine Schubstange beispielsweise zur Betätigung des Schiebers nach vorn und die andere Schubstange zur betätigung desselben Schiebers nach hinten. Bei mehreren Schubstangen können diese Aufgaben von mehreren Schubstangen gemeinsam übernommen werden, um die Greifkraft zu erhöhen.

Bei mehreren Schubstangen kann der Schieber mehrteilig gestaltet sein, so daß jedes Teil für sich auf beispielsweise zwei Schubstangen gleitet und auch durch diese betätigt wird. In diesem Falle bewegt jeder Teilschieber einen Greiffinger separat für sich unabhängig von den anderen Greiffingern. Ein Schieber mit sechs Schubstangen kann beispielsweise in seiner Schubrichtung in drei Teilen geteilt werden, wobei jedes Teil auf zwei Schubstangen geführt und durch dieselben betätigt wird, und drei Greiffinger unabhängig voneinander betätigen.

Erfindungsgemäß ergibt sich eine sehr elegante und kraftvolle Lösung, wenn die Bohrungen des Schiebers, in denen die Schubstangen geführt sind, hohlzylinderförmig zusammengefaßt werden, die einzelnen Kolben zu einem großen Ringkolben und die einzelnen Lager zu einem großen Ringlager mit entsprechender Anzahl von Bohrungen zur Durchführung der Schubstangen ausgebildet werden. Ein derart gestalteter Greifmechanismus besitzt auf engstem Raum sowohl eine große Steifigkeit gegen Torsion und Biegung als auch eine große Kolbenfläche, die eine entsprechend große Betätigungskraft entfalten kann. Er ist in der Mitte großvolumig hohl und bietet viel Platz für andere Aufgaben. Das Druckmittel gelangt entweder wie beschrieben über die hohlen Schubstangen oder über den hohlen Innenraum des Schiebers durch elastische Leitungen.

Der hohle Innenraum des Schiebers kann kreiszylinderförmig oder auch mehreckzylinderförmig sein. Da der Schieber vorzugsweise aus Leichtmetall-Strangpressprofil hergestellt wird, ist nahezu jede beliebige Querschnittsform zu realisieren. So kann beispielsweise die Form der menschlichen Hand mit vier Fingern auf der einen Seite und einem Finger auf der gegenüberliegenden Seite auf einem ellipsenförmigen Schieber leicht realisiert werden. Auch eine Einzelfingerbetätigung ist durch die Zerlegung des Schiebers wie beschrieben möglich.

Die Kolben der Betätigungszylinder sind vorzugsweise mit Magnetringen versehen, um mit Hilfe von Magnetschaltern bzw. Sensoren die Position des Schiebers bzw. der Schieber berührungslos zu erfassen und daraus die Stellung der Greiffinger zu erkennen.

Für einen elektromotorischen Antrieb mit im Schieber integriertem Elektromotor wird eine Gewindespindel zwischen den beiden Spannelementen der Schubstangen parallel zu den Schubstangen fest gespannt. Diese kann mittig oder auch außermittig angebracht sein. Über der Gewindespindel läuft der mit Innengewinde versehene hohle Rotor des Elektromotors. Der Rotor ist im Schieber drehbar gelagert und wird durch die im Schieber sitzenden Ständerwicklungen in Rotation versetzt.

Der Läufer des Elektromotors kann auch quer zu den Schubstangen angeordnet sein und mit einem Ritzelrad an eine zu den Schubstangen parallel liegende Zahnstange angreifen, um sich samt dem Schieber auf den Schubstangen hin- und herzubewegen.

Bei Verwendung eines Elektromotors mit einem daran angeschlossenen Inkrementalgeber wird gleichzeitig die Position des Schiebers erkannt und daraus die Öffnung des Greifers ermittelt. Bei Verwendung eines Schrittmotors kann eine bestimmte Öffnungsweite des Greifers gezielt angesteuert werden.

Erfindungsgemäß sind zur modularen Anbringung der Fingermechanismen am Schubgelenk des Greifers sowohl am vorderen Spannelement bzw. der Spannplatte der Schubstangen als auch am Schlitten bzw. Schieber des Schubgelenkes Befestigungsmöglichkeiten wie z. B. Längs- oder Quernuten vorgesehen, in die das Befestigungsgegenstück der Fingermechanismen eingreifen bzw. an denen sie mittels lösbarer Verbindungen befestigt werden.

Die Fingermechanismen bestehen aus dem sechsgliedrigen Führungsgetriebe aus der Kombination eines Gelenkvierecks mit einem Schubkurbelgetriebe, wobei anstelle des Schubgelenkes zwei oder drei vorzugsweise gleiche Befestigungselemente drehgelenkig mit den restlichen Getriebegliedern verbunden sind, die mittels Schrauben und Nutensteine an den Nuten des Schiebers und der vorderen Spannplatte der Schubstangen befestigt werden.

Der Greiffinger wird vorzugsweise aus Leichtmetall-Strangpressprofilen hergestellt. Dieses Profil besitzt ebenfalls Befestigungsnuten zur Anbringung der erforderlichen Gelenkteile des Führungsgetriebes sowie zur Anbringung von zusätzlichen Greifbacken. Der Greiffinger ist selbst ein Lenker des Führungsgetriebes, dessen Länge durch Verschieben der Gelenkteile, im folgenden Gelenkträger genannt, variabel ist. Auch ist der Abstand zwischen den beiden am Schieber befestigten Gelenkträgern variabel. Dadurch wird die Kinematik des Greiffingers sowie das Übersetzungsverhältnis zwischen der Antriebskraft und der Greifkraft am Greiffinger beeinträchtigt und wunschgemäß eingestellt.

Die anderen Lenker des Führungsgetriebes sind ebenfalls aus vorgefertigten Profilen, vorzugsweise Leichtmetall-Strangpressprofilen, und nach Möglichkeit aus den gleichen Profilen gefertigt.

Die Aufgabe der gelenkigen Verbindung des Greiffingers mit den Lenkern des Gelenkvierecks sowie die der gelenkigen Verbindung der Lenker des Führungsgetriebes mit dem separaten Schubgelenk übernimmt ein Gelenkträger, der ebenfalls vorzugsweise aus Leichtmetall-Strangpressprofilen hergestellt ist.

Zwecks gelenkiger Verbindung der Kurbel des Schubkurbelgetriebes mit seiner Koppel ist im Profil der Koppel ein entsprechender Ausschnitt vorgestanzt. Die Bohrungen der Gelenke der Lenker, die Befestigungsnuten sowie die Bohrungen und Befestigungsnuten des Schubgelenkes der sechsgliedrigen Führungsgetriebe des Greifmechanismus sind alle bei der Herstellung der Profile vorzugsweise bereits vorgefertigt, so daß eine nachträgliche zeitraubende und kostspielige spanabhebende Bearbeitung nicht erforderlich ist.

Somit lassen sich nahezu alle Teile des erfindungsgemäßen Greifmechanismus aus Leichtmetall-Strangpressprofilen herstellen. Ein derartig konzipierter Greifmechanismus läßt sich in Serienfertigung sehr preisgünstig bauen. Er ist sehr stabil und dennoch sehr leicht im Eigengewicht und gestattet dadurch dem Roboter, ein größeres Gewicht zu handhaben.

Die modulare Bauweise erlaubt, einen derartigen Greifmechanismus jederzeit durch Anbringung von zusätzlichen Fingermechanismen in der Fingerzahl zu erweitern bzw. die Fingerzahl eines solchen Greifers gegebenenfalls für andere Aufgaben auch zu reduzieren.

Zwecks größerer seitlicher Stabilität der Greiffinger werden diese seitlich durch Gleit- oder Wälzlager zwischen Elementen geführt, die an den vorderen und/oder hinteren Spannelementen der Schubstangen bzw. an Verbindungsstangen zwischen diesen beiden Platten befestigt sind und sich relativ zum Gestell bzw. Gehäuse des Greifers nicht bewegen.

Ein derartig gebauter Greifmechanismus besitzt die seitliche Stabilität eines massiv gebauten Greifers und die Vorteile des Gelenkgetriebes wie z. B. den sehr großen Bereich der Öffnungsweite, ausschließlich Drehgelenke am Greiffinger, dadurch keine Gefahr der Verklemmung bei allzulangen Greiffingern sowie variable Greifkraft in Abhängigkeit von der Öffnungsweite der Greiffinger.

Selbstverständlich läßt sich die Kurbel des Schubkurbelgetriebes anstatt an der vorderen Spannplatte der Schubstangen auch an der hinteren Spannplatte befestigen. An der Kinematik des Fingermechanismus ändert sich nichts. Lediglich wird der Greiffinger hierdurch etwas länger und hinsichtlich der Biegesteifigkeit und der seitlichen Stabilität nachgiebiger.

Die Erfindung stellt somit einen vielseitig anwendbaren Greifmechanismus vor, der mit einem Minimum an Eigengewicht schwere Gegenstände in einem relativ großen Durchmesserbereich und mit nahezu beliebiger Anzahl von Greiffingern in beliebiger geometrischer Anordnung handhaben kann und dabei relativ preisgünstig hergestellt wird.

Eine die Biege- und Torsionssteifigkeit erhöhende Maßnahme stellt die Weiterbildung dar, bei welcher ein zentraler Spannkörper zwischen die beiden Spannplatten eingespannt wird. Der Spannkörper ist dabei bevorzugt auf Druck belastet, wobei die entsprechenden Zugkräfte von den auf Zug vorgespannten Stangen herrühren. Es ist aber auch eine umgekehrte Kraftbeanspruchung vorgesehen, derart, daß der zentrale Spannkörper auf Zug belastet wird, beispielsweise indem entsprechende Spannschrauben vorgesehen sind und die Stangen auf Druck belastet sind. Ist der Spannkörper hohl ausgebildet, so ist hierdurch zum einen eine Gewichtsersparung erreicht, zum anderen kann der hohle Raum aber auch dazu beigezogen werden, Teile wie z. B. Kabel, Sensoren, Kameras oder Schläuche darin unterzubringen, so daß diese bei der Bewegung des Schiebers nicht daran reiben und eventuell beschädigt werden. Hierbei weisen die hintere und die vordere Spannplatte jeweils entsprechende Durchgangslöcher auf. Die Außenmantelfläche des Spannkörpers kann als Innenfläche eines Ringzylinders verwendet werden, der als Betätigungseinheit des Schubgelenks und somit des Greifmechanismus dient. In diesem Fall ist der Ringkolben des Ringzylinders mit dem Spannkörper und die beiden ringförmigen Endstücke der Stirnflächen des Ringzylinders mit dem Schieber bzw. Schlitten befestigt. Selbstverständlich kann der Ringkolben auch mit dem Schieber bzw. Schlitten und die ringförmigen Endstücke der Stirnflächen des Ringzylinders mit dem Spannkörper befestigt werden.

Nachfolgend wird die Erfindung unter Bezugnahme auf schematisch dargestellte Figuren näher erläutert. Kinematisch einander entsprechende bzw. äquivalente Glieder sind mit gleichen Bezugsnummern versehen. Die alphabetischen Indizes kennzeichnen dasselbe Teil in anderer gestalterischer Ausführungsform.

Im einzelnen zeigen:
- Fig. 1: einen Längsschnitt durch einen erfindungs gemäßen Greifmechanismus mit Darstellung eines einzigen Fingermechanismus mit im Schieber integrierter pneumatischer oder hydraulischer Betätigungseinheit,
- Fig. 2: einen Längsschnitt durch das Schubgelenk des erfindungsgemäßen Greifmechanismus,
- Fig. 3: eine Vorderansicht eines erfindungsgemä ßen Greifmechanismus mit drei seitlich geführten Greiffingern,
- Fig. 4-6: den Querschnitt durch drei verschiedene Profile des Schiebers des erfindungsgemäßen Greifmechanismus,
- Fig. 7-9: einen Ausschnitt von den Profilen der Gelenkträger des erfindungsgemäßen Greifmechanismus,
- Fig. 10: den Querschnitt durch das Profil des Greiffingers mit einem darin befindlichen Nutenstein,
- Fig. 11: einen Querschnitt durch den Hohlzylinder des erfindungsgemäßen Greifmechanismus,
- Fig. 12: einen Ausschnitt aus dem Profil der Kur bel des Schubkurbelgetriebes des erfindungsgemäßen Greifmechanismus,
- Fig. 13: einen Ausschnitt aus dem Profil der übri gen Lenker bzw. Glieder des sechsgliedrigen Führungsgetriebes des erfindungsgemäßen Greifmechanismus,
- Fig. 14: die Koppel des Schubkurbelgetriebes des erfindungsgemäßen Greifmechanismus,
- Fig. 15 +17: die Kurbel des Schubkurbelgetriebes des erfindungsgemäßen Greifmechanismus in schmaler bzw. breiter Ausführung,
- Fig. 16 +18: einen Lenker des Gelenkvierecks vom sechsgliedrigen Führungsgetriebe des erfindungsgemäßen Greifmechanismus in schmaler bzw. breiter Ausführung,
- Fig. 19: einen kompletten Fingermechanismus aus Kunststoff mit Filmgelenken, wie er an das Schubgelenk des erfindungsgemäßen Greifmechanismus modular befestigt wird,
- Fig. 20: einen Fingermechanismus aus Kunststoff mit Filmgelenken im gespritzten, noch nicht zusammengesteckten Zustand,
- Fig. 21: den Querschnitt durch das Profil des kompletten Fingermechanismus aus Kunststoff mit Filmgelenken des erfindungsgemäßen modularen Greifmechanismus,
- Fig. 22: eine Darstellung eines weiteren Ausfüh rungsbeispiels der Erfindung, bei der der Käfig einen zentralen hohlen Spannkörper aufweist.

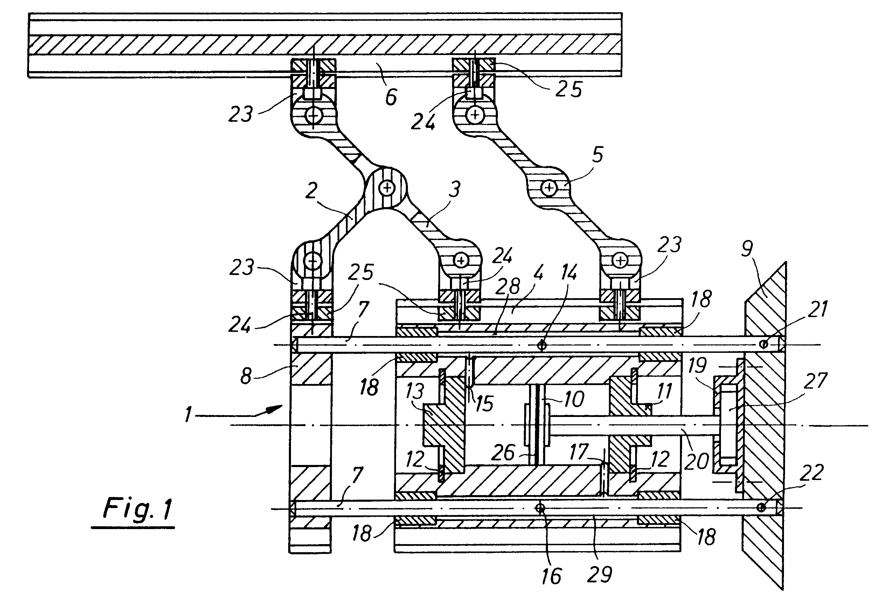

Gemäß Fig. 1 sind mehrere, mindestens zwei, Stangen 7 an ihren beiden Enden mittels Spannplatten 8 und 9 parallel zueinander derart befestigt, daß sie zusammen 7, 8, 9 die Schubstange 1 des Schubgelenkes 1, 4 bilden. Über oder zwischen den Stangen 7 gleitet der Schieber 4 mittels Gleit- oder Wälzlager 18.

Die Stangen 7 können auf Zug oder Druck vorgespannt werden, um die Käfigbauweise 7, 8, 9 der Schubstange 1 gegen Torsion und Biegung noch mehr zu versteifen. Die Stangen 7 sind vorzugsweise hohl ausgebildet, so daß zur Vorspannung eine Gewindestange durch diese hindurch gesteckt wird, die dann gegen die beiden Spannplatten 8 und 9 gekontert wird.

Die vordere Spannplatte 8 der Stangen 7 ist in der Mitte hohl ausgebildet. Dieser Raum dient zur Anbringung von anderen Elementen wie z. B. Sensoren, Stoßdämpfer, optische Bauelemente, Kameras oder dergleichen. Die vordere Spannplatte 8 besitzt am Umfang Befestigungsmöglichkeiten wie z. B. Befestigungsnuten zur Verbindung der Kurbel 2 des Schubkurbelgetriebes 1, 2, 3, 4 mittels Gelenkträger 23, Nutensteine 25 und Schrauben 24. Die vordere Spannplatte 8 kann im Querschnitt drei-, vier-, fünf-, sechs- oder mehreckig, rund oder ellipsenförmig sein. Sie hat am Umfang soviele Befestigungsmöglichkeiten zur Anbringung von Fingermechanismen 2, 3, 5, 6, 23, 24, 25, wie der Greifmechanismus an Greiffinger benötigt, und wird vorzugsweise aus einem vorgefertigten Leichtmetall- oder Kunststoff-Profil abgelängt.

Die hintere Spannplatte 9 der Stangen 7 ist ebenfalls vorzugsweise aus einem Leichtmetall- oder Kunststoff-Profil abgesägt und dient einerseits zur Befestigung der Stangen 7 und andererseits zur Befestigung des Greifmechanismus mit dem Arm des Roboters oder mit dem Handhabungsgerät und zur Durchführung des Druckmittels zu den Stangen 7. Die Mitte dieser Platte ist in der Regel ebenfalls hohl und kann zur Durchführung von Kabeln, Schläuchen und dergleichen dienen. Am Umfang der Spannplatte 9 sind Schrägen bzw. Nuten angebracht, die eine schnelle Montage bzw. Demontage und Auswechseln des Greifmechanismus am Roboterarm ermöglichen.

Über den Stangen 7 oder zwischen denen, d. h. an denen abgestützt, gleitet der Schieber 4 längs der Achsen der Stangen 7 hin und her und führt die Greiffinger senkrecht zur Achse der Stangen 7 auf und ab.

Der Schieber 4 ist vorzugsweise aus einem Leichtmetall- oder Kunststoff-Profil hergestellt. Seine Querschnittsform entspricht am Umfang der Form der vorderen Spannplatte 8 und besitzt genausoviele Befestigungsmöglichkeiten für die Fingermechanismen wie die vordere Spannplatte 8. Am Umfang des Schiebers 4 werden zwei Lenker 3, 5 des Gelenkvierecks 3, 4, 5, 6 mittels Gelenkträger 23, Nutensteine 25 und Schrauben 24 befestigt. Die Befestigung geschieht durch Schnellmontage an den hierfür vorgesehenen Nuten am Umfang des Schiebers 4, wobei der Abstand zwischen den Befestigungspunkten der Lenker 3 und 5 am Schieber bzw. Schlitten 4 variabel einzustellen ist. Dadurch wird die Kinematik des Greifers beeinflußt.

Die Mitte des Schiebers 4 ist hohl gestaltet. Dieser hohle Raum ist als Zylinder für eine pneumatische oder hydraulische Betätigung ausgebildet. Darin befindet sich der Kolben 10, der mittels Kolbenstange 20 axial unbeweglich aber durch die Kupplung 19, 27 radial verschiebbar an der hinteren Spannplatte 9 angreift. Die Kolbenstange 20 kann auch an der vorderen Spannplatte 8 angreifen. Anstelle der Kupplung 19, 27 kann die Kolbenstange 20 auch direkt oder indirekt mittels Kugelgelenk an der vorderen Spannplatte 8 oder hinteren Spannplatte 9 angreifen. Somit wirken die auftretenden Kräfte und Bewegungen des Greifmechanismus nicht radial auf die Kolbenstange 20 der Betätigungseinheit.

Über dem Kolben 10 der Betätigungseinheit befindet sich ein Magnetring 26, der die an der Außenmantelfläche des Schiebers 4, vorzugsweise in den Befestigungsnuten der Fingermechanismen, anzubringenden Reedschalter, Näherungsschalter, Magnetschalter oder Sensoren bei bestimmten Stellungen des Schiebers betätigt und damit der zentralen Steuerung ein Signal für die Stellung des Schiebers 4 und für die Öffnungsweite der Greiffinger 6 liefert.

Der Zylinderraum der Betätigungseinheit ist an seinen beiden Enden durch zwei gleiche Teile bzw. Stopfen 11, 13 abgedichtet, wobei das eine Teil 11 eine Bohrung zum Durchlassen der Kolbenstange 20 beinhaltet, die nicht mittig zu sein braucht.

Das Druckmittel, beispielsweise gölte Druckluft, gelangt über nicht dargestellte Anschlußbohrungen in der hinteren Spannplatte 9 durch die Bohrungen 21 und 22 in die hohlen Stangen 7 und von dort über die Bohrungen 14 und 16 in die Hohlräume 28 der Stangenlagerung, schmiert dort die Stangen 7 im Verschleißbereich zwischen den Lagern 18, gelangt von dort über die Bohrungen 15 und 17 in die Zylinderräume. Der Kolben 10 bewegt sich axial relativ zur Schubstange 1 nicht, und die Stopfen 11 und 13 sind durch Sicherungsringe 12 am Schieber 4 gesichert. Dadurch wandert der Schieber 4 in die eine oder in die andere Richtung.

Die Kurbel 2 des Schubkurbelgetriebes 1, 2, 3, 4 ist vorzugsweise aus einem Leichtmetall- bzw. Kunststoff-Profil hergestellt. Sie greift mit ihrem einen Ende drehbeweglich an den Gelenkträger 23, der an der vorderen Spannplatte 8 befestigt wird. Mit ihrem anderen Ende greift die Kurbel 2 etwa mittig an der Koppel 3 drehbeweglich an.

Die Koppel 3 und der Lenker 5 sind vorzugsweise beide aus dem gleichen Leichtmetall- oder Kunststoff-Profil hergestellt, wobei die Koppel 3 etwa in der Mitte eine Aussparung besitzt, die für die Anlenkung der Kurbel 2 vorgesehen ist.

Beide Lenker 3, 5 sind an ihren insgesamt vier Enden an den Gelenkträgern 23 drehgelenkig verbunden. Die Gelenkträger 23 sind paarweise mit dem Schieber 4 und mit dem Greiffinger 6 fest, aber verstellbar, verbunden.

Die Bohrungen, Befestigungsnuten und Aussparungen zur Befestigung der Lenker und anderen Teile sowie für die Gelenke sind vorzugsweise alle bei der Herstellung der Profile schon vorgefertigt, so daß eine nachträgliche spanabhebende Bearbeitung kaum noch anfällt.

Der Greiffinger 6 ist vorzugsweise aus einem Leichtmetall- oder Kunststoff-Profil hergestellt. Er besitzt an seinem Umfang Befestigungsnuten, die zur schnellen Befestigung von zusätzlichen Backen und zur Anbringung der Gelenkträger 23 der Lenker 3 und 5 des Gelenkvierecks 3, 4, 5, 6 dienen.

Auf diese Weise läßt sich erfindungsgemäß der gesamte Fingermechanismus, bestehend aus den Lenkern 2, 3, 5 und dem Greiffinger 6 mittels Gelenkträger 23 als ein Fingermodul vormontieren und bei Bedarf mit Hilfe der Nutensteine 25 und Schrauben 24 modular an das Schubgelenk 1, 4 anbringen.

Der Schieber 4 kann natürlich auch mit Hilfe eines elektrischen Antriebes mittels Schraubengetriebes oder mit einem Zahnrad und einer Zahnstange relativ zur Schubstange 1 bewegt werden.

Zwecks Verringerung des Eigengewichts oder zwecks Einsatzes des Greifermechanismus in aggressiven oder heißen Medien, d. h. überall dort, wo der Antrieb nicht im Greifer selbst untergebracht werden darf, wird der Schieber 4 mit Hilfe eines Seil- oder Riementriebs hin- und herbewegt.

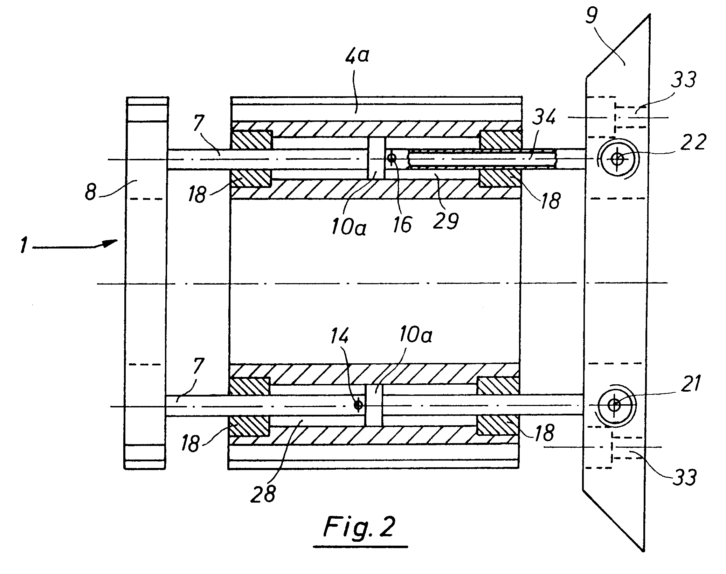

Fig. 2 zeigt einen Längsschnitt durch den Schieber 4a des Schubgelenkes 1, 4a des erfindungsgemäßen Greifmechanismus.

Erfindungsgemäß besteht die Schubstange 1 aus den Stangen 7 und den beiden Spannplatten 8 und 9. Der Schieber 4a gleitet über den Stangen 7. Die Gleitflächen des Schiebers 4a auf den Stangen 7 bilden die Wälz- bzw. Gleitlager 18.

Gemäß Fig. 2 sind die zylindrischen Hohlräume 28, 29 zwischen den Lagern 18 durch die mit den Stangen 7 befestigten Kolben 10a zweigeteilt. Die Zylinderräume 28, 29 bilden zusammen mit den Stangen 7, Lagern 18 und Kolben 10a die Betätigungseinheiten des Schiebers 4a relativ zur Schubstange 1.

Anstelle der einzelnen Bohrungen 28, 29 kann im Schieber 4a ein zylindrischer Hohlraum gebildet werden, durch den die Stangen 7 hindurch gehen. In diesem Falle sind die beiden Lager 18 und der einzige Kolben 10a ringförmig. Während der Kolbenring 10a alle Stangen 7 miteinander verbindet, besitzen die beiden Lagerringe 18 zwecks Durchführung der Stangen 7 entsprechende Anzahl von Bohrungen.

Zur Betätigung des Schiebers 4a gelangt das Druckmittel über die Anschlüsse 21 bzw. 22 durch den Hohlraum 34 der Stangen 7 über die Bohrungen 14 bzw. 16 in die Zylinder- bzw. Hohlzylinderräume 28 und 29 und bewegt den Schieber 4a hin bzw. her.

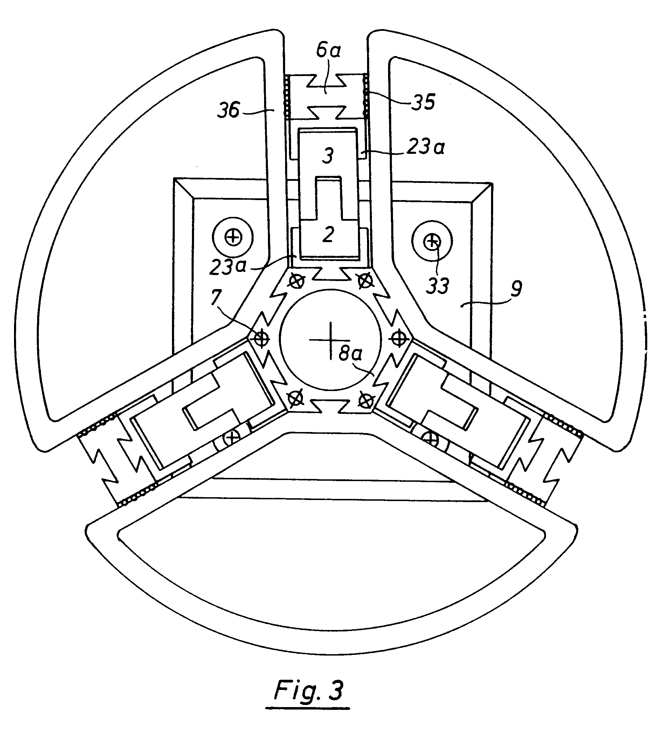

Fig. 3 zeigt eine Vorderansicht eines Dreifinger-Greifmechanismus gemäß der Erfindung. Im Hintergrund ist die Spannplatte 9 zu sehen, die in diesem Falle quadratisch ist. Darin befinden sich die Befestigungslöcher 33, die zur Montage des Greifmechanismus an den Roboterarm dienen. Die Spannplatte 9 besitzt am Umfang eine große Fase, die zur Schnellmontage des Greifmechanismus an den Roboterarm ohne Schrauben dient.

Die vordere Spannplatte 8a ist sechseckig, in der Mitte hohl ausgebildet und hält sechs Stangen 7 zusammen. An ihrem Umfang sind mittels Schwalbenschwanz-Nuten und -Steine drei Gelenkträger 23a der Kurbel 2 von drei Fingermechanismen befestigt. An den anderen drei Seiten der vorderen Spannplatte 8a der Stangen 7 sind drei Führungsglieder 36 befestigt, an deren Seitenflächen die Greiffinger 6a mittels Gleit- oder Wälzführungen 35 geführt und dadurch weiterhin stabilisiert werden.

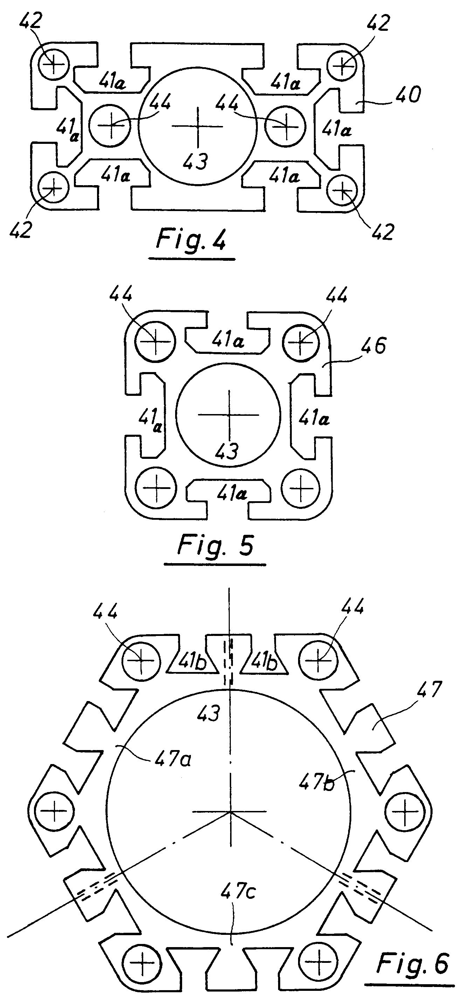

Fig. 4 zeigt den Querschnitt eines viereckigen Profils 40, das für die vordere Spannplatte 8 sowie für den Schlitten bzw. Schieber 4 zur modularen Anbringung von bis zu sechs Fingermechanismen geeignet ist. Die Bohrungen 42 oder 44 dienen zur Befestigung bzw. Durchführung der Stangen 7 an der vorderen Spannplatte 8 bzw. durch den Schieber 4. Die mittlere Bohrung 43 kann zur Unterbringung der Betätigungseinheit dienen, falls die Bohrungen 44 hierfür zu klein sind. Die Nuten 41a dienen zur Befestigung der gelenkträger 23 der Lenker 2, 3 und 5 der Fingermechanismen 2, 3, 5, 6, 23, 24, 25.

Fig. 5 zeigt den Querschnitt eines quadratischen Profils 46, wie dieses erfindungsgemäß für einen Zweifinger- bzw. einen quadratischen Vierfinger-Greifmechanismus erforderlich ist.

Fig. 6 zeigt den Querschnitt eines sechseckigen Profils 47 für einen Zwei-, Drei- oder Sechsfinger-Greifmechanismus.

Erfindungsgemäß sind die Bohrungen 44 für die Stangen 7 vorgesehen. Die Schwalbenschwanz-Nuten 41b dienen zur Befestigung der modular anzubringenden Fingermechanismen. Das sechseckige Profil des Schiebers 4 kann auch in Längsrichtung in drei gleiche Teile 47a, 47b, und 47c, wie gestrichelt dargestellt, geteilt werden, um drei Greiffinger unabhängig voneinander zu betätigen. Die Funktion der Betätigungseinheiten werden entweder in die Bohrungen 44 der Stangen 7, wie unter Fig. 2 beschrieben, oder in der großen zentralen Bohrung 43 untergebracht.

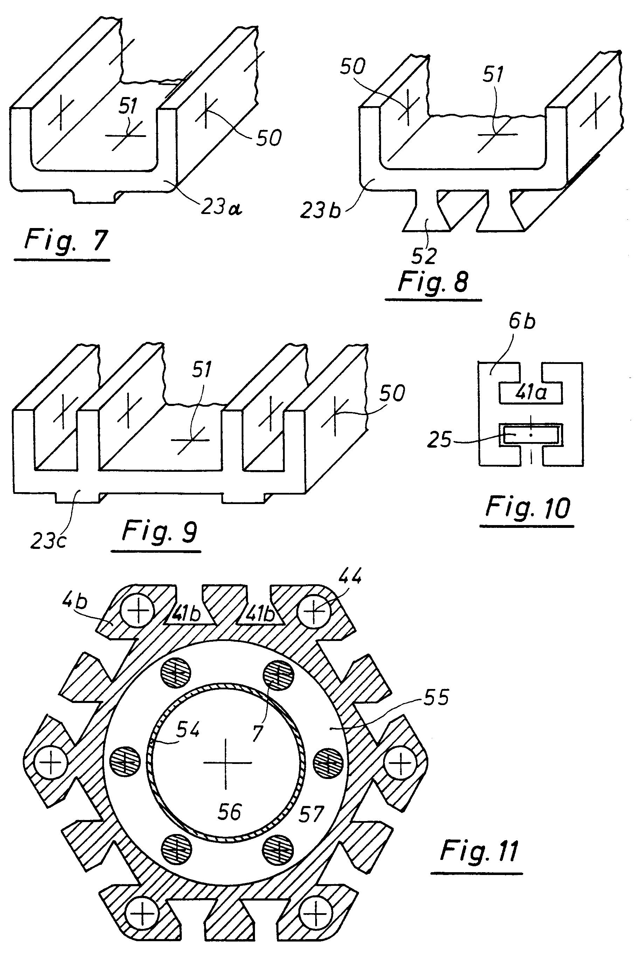

Fig. 7 zeigt einen Abschnitt eines Profils 23a, das sich für die Herstellung der Gelenkträger 23 in schmaler Ausführung eignet.

Die Bohrungen 50 der Gelenkachsen sowie die Bohrungen 51 der Befestigung der Gelenkträger 23 an der vorderen Spannplatte 8, am Schieber 4 und am Greiffinger 6 sind vorzugsweise im Profil 23 vorgefertigt. An der Unterseite des U-Profils 23 ragt das Profil von der flachen Unterseite etwas hervor. Dieser Abschnitt greift in die entsprechende Nut der Spannplatte 8, des Schiebers 4 sowie des Greiffingers 6 und dient zur Querstabilisierung der Gelenkträger 23.

Fig. 8 zeigt einen Teil eines Profils 23b für die Herstellung der Gelenkträger 23 in breiterer Ausführung mit zwei Schwalbenschwanz-Befestigungsnasen 52, die in die entsprechenden Nuten der vorderen Spannplatte 8, des Schiebers 4 sowie des Greiffingers 6 gesteckt und befestigt werden.

Fig. 9 zeigt ein weiteres Profil, ein Doppel-U-Profil 23c, wie es für die Gelenkträger 23 für größere und schwerere Ausführungen geeignet ist. Es wird mittels Nutensteine an der vorderen Spannplatte 8, am Schieber 4 sowie am Greiffinger 6 befestigt.

Fig. 10 zeigt eine Vorderansicht eines Doppel-T-Profils 6b, das sich für den Greiffinger 6 eignet. In der rechteckförmigen Nut 41a befindet sich ein Nutenstein 25, der zur Befestigung von Greifbacken über oder unter des Greiffingers 6, aber auch zur Befestigung der Gelenkträger 23 am Greiffinger, an der vorderen Spannplatte 8 sowie am Schieber 4 dient.

Fig. 11 zeigt einen Querschnitt durch das Schubgelenk 1, 4 des erfindungsgemäßen Greifmechanismus mit der Ausführung der hohlzylindrischen Betätigungseinheit. Die Stangen 7, die hohl sein können, sind mit dem Ringkolben 55 fest verbunden. Die vordere Spannplatte 8 und die hintere Spannplatte 9 sind nicht zu sehen. Der sechseckige Schieber 4b ist an seinen Stirnseiten durch zwei Lagerringe, die hier nicht zu sehen sind und die Form des Ringkolbens 55 haben, mit dem Rohr 54 fest verbunden. Der Ringkolben 55 unterteilt den hohlzylinderförmigen Raum der Betätigungseinheiten durch zwei, wobei der vordere Raum 57 zu sehen ist. In der Mitte des Schiebers 4b bleibt ein großer Raum 56 frei, der anderweitig wie bereits beschrieben Verwendung finden kann.

Der Ringkolben 55 und die Lagerringe an den Stirnseiten des Raumes 57 können im Querschnitt auch andere geometrische Formen, wie z. B. oval, eckig oder anders annehmen.

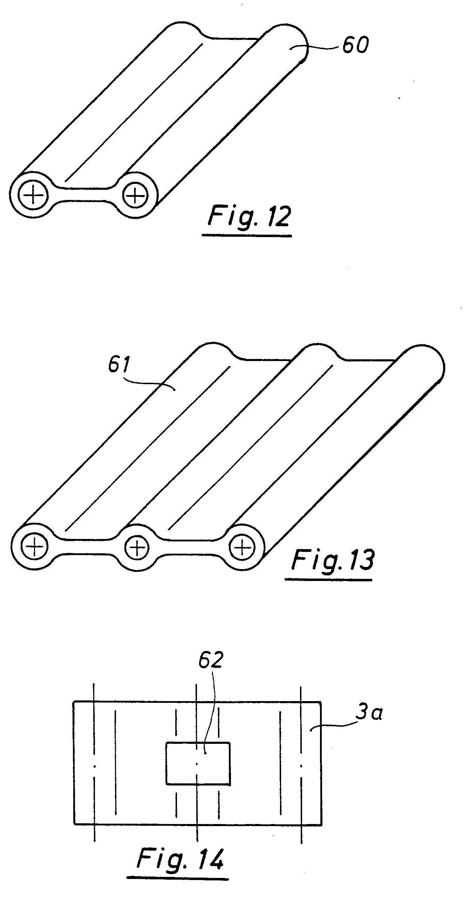

Fig. 12 zeigt einen Abschnitt eines Leichtmetall- bzw. Kunststoff-Profils 60, aus dem die Kurbel 2 des Schubkurbelgetriebes 1, 2, 3, 4 der Fingermechanismen abgesägt werden.

Fig. 13 zeigt einen Abschnitt eines Leichtmetall- oder Kunststoff-Profils 61, aus dem die Lenker 3 und 5 der Fingermechanismen hergestellt werden. Die Bohrungen der Gelenke sind im Profil vorgefertigt.

Fig. 14 zeigt einen bereits fertiggestellten Lenker 3a, wie dieser für die Koppel 3 des Schubkurbelgetriebes 1, 2, 3, 4 benötigt wird. Zwecks Anlenkung der Kurbel 2 an der Koppel 3 ist in der Mitte des Lenkers 3a eine Aussparung 62 ausgestanzt. Diese Aussparung kann bereits bei der Fertigung des Profils 61 erfolgen.

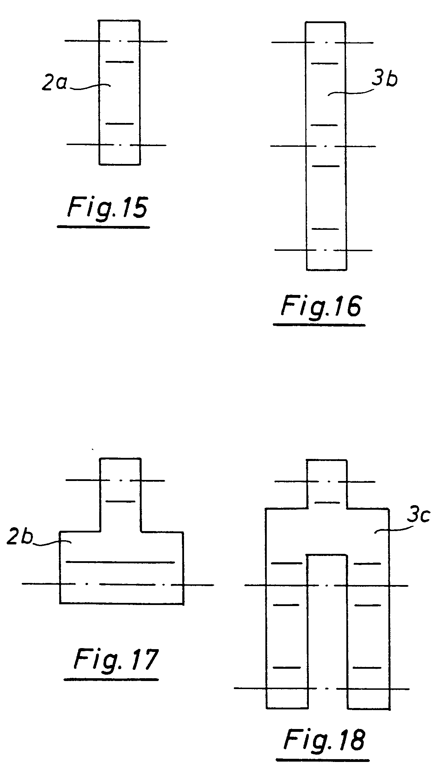

Fig. 15 zeigt einen schmalen Lenker 2a, wie er aus dem Profil 60 für die Kurbel 2 des Fingermechanismus abgesägt worden ist.

Fig. 16 zeigt einen schmalen Lenker 3b, der beispielsweise in doppelter Anordnung nebeneinander die Lenker 3 und 5 ersetzen kann und in die entsprechenden U-Formen des Gelenkträgers 23c eingreift, um einen breiten Lenker zu ersetzen.

Fig. 17 zeigt einen kleinen Lenker 2b, wie er in breiterer Ausführung als Kurbel 2 des Schubkurbelgetriebes für den Fingermechanismus 1, 2, 3, 4, 5, 6, 23, 24, 25 gestaltet werden kann.

Fig. 18 zeigt einen Lenker 3c, wie er in breiterer Ausführung als Koppel 3 des Schubkurbelgetriebes 1, 2, 3, 4 oder auch als Lenker 5 des Gelenkvierecks 3, 4, 5, 6 derart gestaltet werden kann, daß er unten am Schieber 4 breit und oben am Greiffinger 6 schmal angreift.

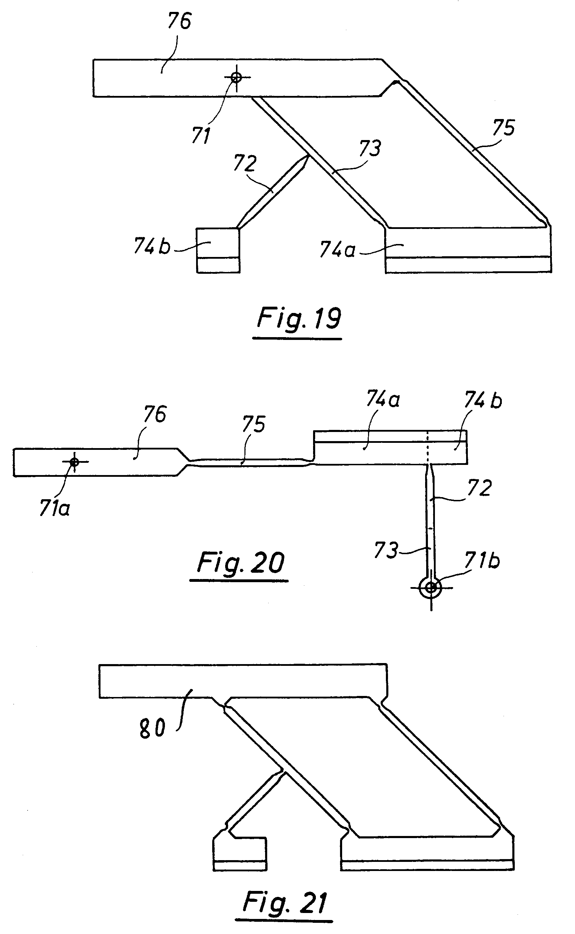

Fig. 19 zeigt einen kompletten Fingermechanismus im montierten Zustand. Der Greiffinger 76, Lenker 75, Gelenkträger 74a und 74b, Kurbel 72, Lenker 73 sind alle zusammen aus Kunststoff in einem, d. h. in einer Form mit Filmgelenken, als Scharnier gegossen, so daß zum Schluß nur noch das Gelenk 71 montiert werden muß, um den kompletten Fingermechanismus herzustellen. Die Kurbel 72 wird aus der Mitte des Lenkers 73 herausgeschert. Ebenfalls ist der Gelenkträger 74b beim Gießen am Gelenkträger 74a darangegossen und wird nachträglich hiervon getrennt.

Fig. 20 zeigt den Fingermechanismus gemäß Fig. 19 nach der Entnahme aus der Form, bevor der Gelenkträger 74b von 74a getrennt und die Kurbel 72 aus dem Lenker 73 ausgeschert und das Gelenk 71b in die entsprechende Bohrung 71a hinein gesteckt ist.

Fig. 21 zeigt einen kompletten Fingermechanismus aus Kunststoff mit Filmgelenken, wie er aus einem im Querschnitt gleich gestalteten Kunststoff-Profil 80 in Scheiben beliebiger Breite abgesägt werden kann.

Somit stellt die Erfindung einen Greifmechanismus dar, der in Leichtbauweise alle Vorteile eines massiv gebauten Greifmechanismus bietet, seine Fingerzahl je nach Aufgabe und Bedarf modular erweitern bzw. reduzieren läßt und insgesamt sehr wirtschaftlich gefertigt werden kann. Die vorgefertigten Module lassen auch eine wirtschaftliche Baureihenkonstruktion zu, um die Palette der greifmechanismen auch nach Objektgröße wirtschaftlich zu erweitern. Die Teile können nahezu alle aus vorgefertigten Profilen hergestellt werden. Der Antrieb ist ebenfalls universell, da der Greifmachanismus eine einzige, vorzugsweise lineare Bewegung braucht, um alle seine Greiffinger zu betätigen.

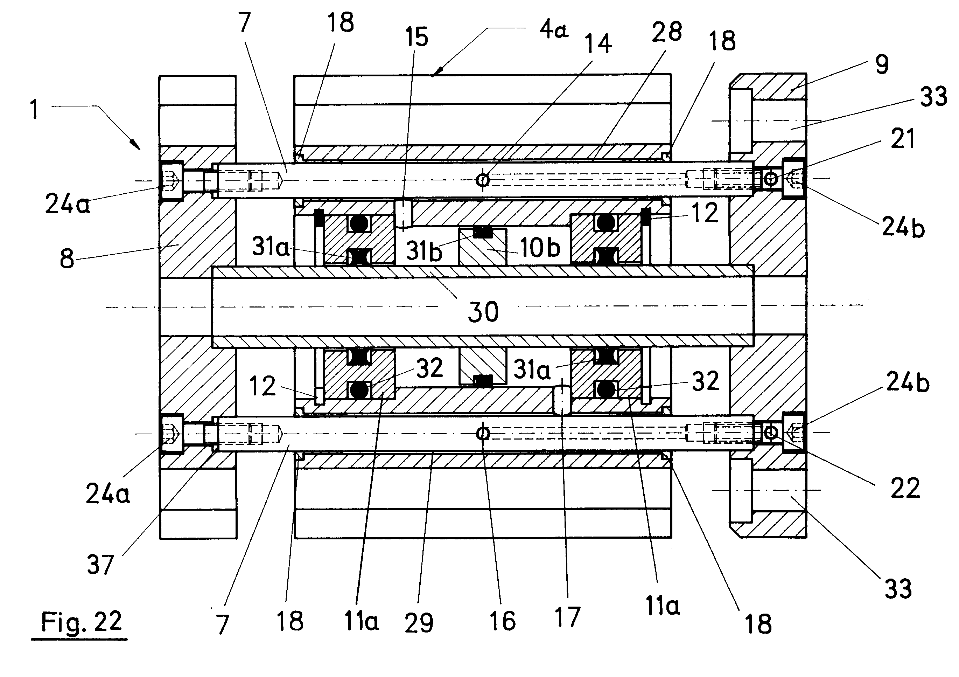

Das in der Fig. 22 dargestellte Ausführungsbeispiel weist einen zentralen Spannkörper 30 auf.

Die vordere Spannplatte 8 besitzt an ihrem Umfang Befestigungsnuten und -möglichkeiten wie z. B. Schwalbenschwanzführungen zur Aufnahme der zugehörigen, nicht dargestellten Gelenkträger des sechsgliedrigen Greiffinger-Führungsgetriebes. Sie besteht aus einem Leichtmetallprofil und beinhaltet entsprechende Bohrungen und Senkungen zur Aufnahme des Spannkörpers 30 und der Schubstangen 7.

Die hintere Spannplatte 9 beinhaltet ebenfalls wie die vordere Spannplatte 8 Bohrungen und Senkungen zur Aufnahme des Spannkörpers 30 und der Schubstangen 7. Darüber hinaus besitzt die hintere Spannplatte 9 zusätzliche Bohrungen 33, Senkungen und Fasen zur Befestigung des Greifmechanismus am Roboterarm bzw. am Handhabungsgerät. Auch die Druckmittelzufuhr über die Bohrungen 21, 22 der Schrauben 24b erfolgt vorzugsweise über die hintere Spannplatte 9, obgleich diese auch über die vordere Spannplatte 8 erfolgen kann.

In etwa der Mitte der beiden Spannplatten 8, 9 ist der Spannkörper 30 platziert, der vorzugsweise hohl ausgebildet ist. Die Spannplatten 8, 9 werden durch die Schubstangen 7 mittels Schrauben 24a und 24b gegen den Spannkörper 30 gespannt. Die Schubstangen 7 haben in ihren Aufnahmebohrungen in den Spannplatten 8 oder 9 noch etwas Luft bzw. Platz 37, damit sie die beiden Spannplatten 8, 9 in ausreichendem Maße gegen den Spannkörper 30 spannen können. Es können auch mehrere Spannkörper 30 nebeneinander existieren. Selbstverständlich kann auch der oder die Spannkörper 30 die beiden Spannplatten 8, 9 gegen die Schubstange 7 spannen, so daß der Spannkörper 30 auf Zug und die Schubstangen auf Druck beansprucht werden.

Die derart vorgespannte Käfigkonstruktion 1 stellt erfindungsgemäß eine sehr stabile, sehr biege- und torsionssteife Schubstange des Schubgelenks 1, 4 des Greifmechanismus dar.

Die Schubstangen 7 sind zwecks Druckmittelzufuhr hohl gestaltet. Das Druckmittel gelangt über die Querbohrungen 14, 16 in die Räume 28 und 29 und von dort über die Querbohrungen 15 und 17 in die Ringzylinderräume und bewegt den Schlitten bzw. Schieber 4 hin und her.

Der Schieber bzw. Schlitten 4 besteht aus einem Leichtmetallprofil und besitzt an seinem Umfang Befestigungsnuten und -möglichkeiten wie z. B. Schwalbenschwanzführungen zur Aufnahme der zugehörigen, nicht dargestellten, Gelenkträger des sechsgliedrigen Greiffinger-Führungsgetriebes. Er gleitet mittels Gleit- bzw. Wälzlager 18 über den Schubstangen 7. Er ist im Inneren hohl und umfaßt den bzw. die Spannkörper 30. Der hohle Zwischenraum zwischen der Innenmantelfläche des Schiebers 4 und der Außenmantelfläche des Spannkörpers 30 ist als Ringzylinder zur Betätigung des Schiebers 4 ausgebildet. Dabei ist der Ringkolben 10b mit dem Spannkörper 30 befestigt. Der Quadring 31b verhindert eine metallische Berührung des Ringkolbens 10b mit der Innenmantelfläche des Schiebers 4. Der Quadring 31b kann auch einen magnetischen Ring beinhalten, der zur Betätigung eines Reed-Relais bzw. Näherungsschalters zwecks Positionserkennung des Greifers dient.

Die Stirnflächen des hohlzylinderförmigen Innenraums zwischen der Schlitten-Innenmantelfläche und der Außenmantelfläche des Spannkörpers 30 schließen die ringförmigen Zylinderdeckel 11a, die mittels Sicherungsringe 12 am Schlitten befestigt sind und durch die O-Ringe 32 gegen diese abgedichtet werden. Zwischen den ringförmigen Zylinderdeckeln 11a und der Außenmantelfläche des Spannkörpers 30 liegt der Quadring 31a, der zum einen die Arbeitszylinderräume nach außen abdichtet und zum anderen eine metallische Berührung des Zylinderdeckels 11a mit dem Spannkörper 30 verhindert.

Der Ringkolben 10b kann auch mit der Schlitten-Innenmantelfläche befestigt und gegen die Außenmantelfläche des Spannkörpers 30 gleitend abgedichtet werden. In diesem Falle werden die Zylinderdeckel 11a mit dem Spannkörper 30 befestigt und gegen die Schlitten-Innenmantelfläche gleitend abgedichtet.

Die in der vorstehenden Beschreibung, der Zeichnung und den Ansprüchen offenbarten Merkmale der Erfindung können sowohl einzeln als auch in beliebiger Kombination für die Verwirklichung der Erfindung von Bedeutung sein. Alle offenbarten Merkmale sind erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen.

## Patentansprüche

1. Greifmechanismus für ein Handhabungsgerät oder dergleichen, mit wenigstens einem beweglichen, um eine Schubachse schwenkbaren Greiffinger (6), als Koppel eines kinematisch mehrgliedrigen, zwangläufigen Führungsgetriebes (1, 2, 3, 4, 5, 6), das mindestens ein Schubkurbelgetriebe (1, 2, 3, 4) als Betätigungseinheit beinhaltet, welches eine einendig an einem ersten Lenker (3) angreifende, anderendig an einer Schubstange (1) angelenkte Kurbel (2) und einen auf der Schubstange (1) geführten, den ersten Lenker (3) widerlagernden Schieber (4) aufweist, wobei am Schieber (4) axial versetzt ein zweiter Lenker (5) gelagert ist und beide Lenker (3, 5) des Führungsgetriebes am Greiffinger (6) angreifen und die Schubstange (1) bei der Greiferbewegung keine Bewegung in Richtung der Schubachse vollführt, gekennzeichnet durch eine von mehreren dezentral angeordneten Stangen (7) als Käfig ausgebildete Schubstange (1).

2. Greifmechanismus nach Anspruch 1, dadurch gekennzeichnet, daß der Schieber als Schlitten auf den Stangen (7) gleitend angeordnet ist.

3. Greifmechanismus nach einem oder mehreren der vorhergehenden Ansprüche, gekennzeichnet durch endseitig der Stangen (7) angeordnete vorgespannte Spannplatten (8, 9).

4. Greifmechanismus nach einem oder mehreren der vorhergehenden Ansprüche, gekennzeichnet durch eine hohle Ausbildung der Stangen (7).

5. Greifmechanismus nach einem oder mehreren der vorhergehenden Ansprüche, gekennzeichnet durch eine in den hohlen Stangen steckende vorgespannte Gewindestange.

6. Greifmechanismus nach einem oder mehreren der vorhergehenden Ansprüche, gekennzeichnet durch eine zentral im Käfig angeordnete Kolbenstange (20), welcher ein ortsfester Kolben (10) in einem dem Schieber zugeordneten Zylinder angeordnet ist.

7. Greifmechanismus nach einem oder mehreren der vorhergehenden Ansprüche, dadurch gekennzeichnet, daß die hohl ausgebildeten Stangen (7) als Druckmittelzuleitung zum Zylinder ausgebildet sind.

8. Greifmechnismus nach einem oder mehreren der vorhergehenden Ansprüche, gekennzeichnet durch einen mittels der Stangen (7) zwischen den Spannplatten (8, 9) eingespannten Körper (30).

9. Greifmechanismus nach einem oder mehreren der vorhergehenden Ansprüche, gekennzeichnet durch eine zentrale Anordnung des Körpers (30).

10. Greifmechanismus nach einem oder mehreren der vorhergehenden Ansprüche, dadurch gekennzeichnet, daß der Körper (30) ein Hohlkörper ist.

11. Greifmechanismus nach einem oder mehreren der vorhergehenden Ansprüche, dadurch gekennzeichnet, daß der Körper (30) den Kolben (10b) ausbildet.

12. Greifmechanismus nach einem oder mehreren der vorhergehenden Ansprüche, dadurch gekennzeichnet, daß der Schieber (4) mehrteilig (47) ausgebildet ist.

13. Greifermechanismus nach einem oder mehreren der vorhergehenden Ansprüche, dadurch gekennzeichnet, daß der Greiferfinger (6) durch Gleit- oder Wälzlager (35) geführt ist.

14. Greifermechanismus nach einem oder mehreren der vorhergehenden Ansprüche, dadurch gekennzeichnet, daß der Fingermechanismus 2, 3, 5, 6, 23 aus Kunststoff mit Filmgelenken (72, 73, 74a, 74b, 75, 76) bzw. aus einem Kunststoffprofil (80) ausgebildet ist.

## Claims

1. Gripping mechanism for handling equipment or the like with at least one moveable gripping finger (6) which pivots around a thrust axis as the coupler of a kinematically multi-component positive guide linkage (1, 2, 3, 4, 5, 6) containing at least one slider-crank mechanism (1, 2, 3, 4) as an operating unit which has a crank (2) which engages at one end with a first guide bar (3) and at the other end with a push rod (1) and a slider (4), guided on the pusch rod (1), wich engages the first guide bar (3), a second guide bar (5) being supported in an axially staggered manner on the slider (4) with both guide bars (3, 5) engaging with the gripping Finger (6) of the guide linkage and the push rod (1) not moving in the direction of the thrust axis during the movement of the gripping mechanism,
characterized by a cage-like push rod (1) formed by several decentrally arranged rods (7).

2. Gripping mechanism in accordance with claim 1 characterized by the fact that the slider is arranged so that it can glide on the rods (7) as a slide block.

3. Gripping mechanism in accordance with one or more of the preceding claims characterized by prestressed clamping plates (8, 9) being arranged at the ends of the rods (7).

4. Gripping mechanism in accordance with one or more of the preceding claims characterized by the rods (7) being hollow.

5. Gripping mechanism in accordance with one or more of the preceding claims characterized by a prestressed threaded rod being inserted in the hollow rods.

6. Gripping mechanism in accordance with one or more of the preceding claims characterized by a piston rod (20) wich is arranged centrally in the cage and wich has a piston (10) fixed in position within a cylinder associated with the slide.

7. Gripping mechanism in accordance with one or more of the preceding claims characterized by the fact that the hollow rods (7) are designed as a pressure medium feed to the cylinder.

8. Gripping mechanism in accordance with one or more of the preceding claims characterized by a body (30) being clamped between the clamping plates (8, 9) by means of the rods (7).

9. Gripping mechanism in accordance with one or more of the preceding claims characterized by a central arrangement of the body (30).

10. Gripping mechanism in accordance with one or more of the preceding claims characterized by the fact that the body (30) is a hollow body.

11. Gripping mechanism in accordance with one or more of the preceding claims characterized by the fact that the body (30) forms the piston (10b).

12. Gripping mechanism in accordance with one or more of the preceding claims characterized by the fact that the slider (4) is of multipartite (47) development.

13. Gripping mechanism in accordance with one or more of the preceding claims characterized by the fact that the finger is guided lateral and stabilized by means of plain or roller bearings (35).

14. Gripping mechanism in accordance with one or more of the preceding claims characterized by the finger mechanism being made of plastic profile (80) with film joints.

## Revendications

1. Mécanisme de préhension pour un manipulateur ou appareil similaire, comportant au moins un doigt de serrage (6) mobile orientable autour d'un axe de poussée, comme bielle d'un réducteur de guidage (1, 2, 3, 4, 5, 6) à accouplement rigide à plusieurs éléments cinématiques, qui comprend au moins un réducteur à joint coulissant (1, 2, 3, 4) comme unité de commande, comportant une manivelle articulée (2) agissant à une extrémité sur un premier bras oscillant (3) et à l'autre extrémité sur une barre de poussée (1), et un coulisseau (4) guidé sur la barre de poussée (1), en butée contre le premier bras oscillant (3), un second bras oscillant (5) étant logé sur le coulisseau (4) avec un décalage axial et les deux bras oscillants (3, 5) du réducteur de guidage agissant sur le doigt de la pince (6) et la barre de poussée (1) n'accomplissant aucun mouvement en direction de l'axe de poussée lors du mouvement de la pince, caractérisé par une barre de poussée (1) conçue comme cage par plusieurs barres (7) disposées de manière décentralisée.

2. Mécanisme de préhension selon la revendication 1, caractérisé en ce que le coulisseau est disposé de manière coulissante sur les barres (7) comme chariot.

3. Mécanisme de préhension selon une ou plusieurs des revendications précédentes, caractérisé par des plaques de serrage (8, 9) précontraintes disposées à l'extrémité des barres (7).

4. Mécanisme de préhension selon une ou plusieurs des revendications précédentes, caractérisé par une conception creuse des barres (7).

5. Mécanisme de préhension selon une ou plusieurs des revendications précédentes, caractérisé par une tige filetée précontrainte fixée dans les barres creuses.

6. Mécanisme de préhension selon une ou plusieurs des revendications précédentes, caractérisé par une tige de piston (20) disposée centralement dans la cage, sur laquelle un piston stationnaire (10) est disposé dans un vérin affecté au coulisseau.

7. Mécanisme de préhension selon une ou plusieurs des revendications précédentes, caractérisé par le fait que les barres (7) de conception creuse sont conçues comme conduite d'amenée de fluides sous pression au vérin.

8. Mécanisme de préhension selon une ou plusieurs des revendications précédentes, caractérisé par un corps (30) monté entre les plaques de serrage (8, 9) au moyen des barres (7).

9. Mécanisme de préhension selon une ou plusieurs des revendications précédentes, caractérisé par une disposition centrale du corps (30).

10. Mécanisme de préhension selon une ou plusieurs des revendications précédentes, caractérisé en ce que le corps (30) est un corps creux.

11. Mécanisme de préhension selon une ou plusieurs des revendications précédentes, caractérisé en ce que le corps (30) constitue le piston (10b).

12. Mécanisme de préhension selon une ou plusieurs des revendications précédentes, caractérisé en ce que le coulisseau (4) est conçu en plusieurs parties (47).

13. Mécanisme de préhension selon une ou plusieurs des revendications précédentes, caractérisé en ce que le doigt de la pince (6) est guidé à travers des paliers lisses ou des roulements (35).

14. Mécanisme de préhension selon une ou plusieurs des revendications précédentes, caractérisé en ce que le mécanisme du doigt 2, 3, 5, 6, 23 est conçu en matière plastique avec des articulations pourvues d'un film (72, 73, 74a, 74b, 75, 76) ou d'un profilé en matière plastique (80).
